(19) Europäisches Patentamt
European Patent Office
Office européen des brevets

(11) EP 3 354 687 A1

(12) # EUROPEAN PATENT APPLICATION

(43) Date of publication:
**01.08.2018 Bulletin 2018/31**

(51) Int Cl.:
***C08L 27/12*** *(2006.01)*

(21) Application number: **17153299.7**

(22) Date of filing: **26.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Solvay Specialty Polymers Italy S.p.A.**
**20021 Bollate (MI) (IT)**

(72) Inventors:
- **SANGUINETI, Aldo**
  **20133 Milano (IT)**
- **MIRENDA, Marco**
  **20017 Rho (MI) (IT)**
- **MAHAPATRA, Sibdas Singha**
  **390008 Vadodara, Gujarat (IN)**
- **SRINIVASAN, Satchit**
  **Dallas, TX Texas 75230 (US)**
- **KAPELYUSHKO, Valeriy**
  **15121 Alessandria (AL) (IT)**
- **AHUJA, Ritu**
  **390024 Vadodara, Gujarat (IN)**

(74) Representative: **Benvenuti, Federica et al**
**Solvay S.A.**
**Département de la Propriété Intellectuelle**
**Rue de Ransbeek, 310**
**1120 Bruxelles (BE)**

(54) **FLUORINE-CONTAINING THERMOPLASTIC ELASTOMER COMPOSITION**

(57) The invention pertains to a thermoplastic vulcanizate fluorine-containing composition [vulcanizate (C)], comprising a continuous thermoplastic fluoropolymer phase and a dispersed vulcanized fluoroelastomer phase, said composition comprising:
- at least one thermoplastic fluoropolymer [polymer (F)];
- at least one (per)fluoroelastomer [elastomer (A)]; and
- at least one organic esters plasticizer [plasticizer (P)].

EP 3 354 687 A1

## Description

### Technical Field

The present invention relates to a fluorine-containing thermoplastic elastomer composition, comprising a continuous thermoplastic fluorocarbon polymer phase and a dispersed vulcanized fluorine-containing elastomer phase, which is useful as melt-formable material having rubber elasticity.

### Background Art

Two-phase compositions comprising a continuous phase thermoplastic material and a disperse phase elastomer, produced by dynamically vulcanizing the elastomer while the dispersed phase elastomer is mixed under shear in the continuous thermoplastic material kept in the molten state are well known in the art and often referred to as thermoplastic vulcanizates (TPV).

These materials are particularly advantageous in that they derive their rubber-like properties from the dispersed phase, so that they can be notably used in all rubber-typical fields of use (sealing articles, including seals and gaskets, pipes, hoses, flat sheets, and the like), while being processable as thermoplasts, including possibility of reforming scraps, flashes or defective parts.

Because of advantageous properties of fluorine-containing materials, TPV including both thermoplastic fluorinated polymer continuous phase and fluorine-containing elastomer dispersed phase have attracted great deal of attention for providing high level of chemical resistance with the advantages of thermoplastic processability.

For instance, patent document EP 168020 A (DUPONT DE NEMOURS) 1/15/1986 discloses fluorinated thermoplastic elastomer containing two phases, namely a crystalline thermoplastic phase and a dispersed fluorinated amorphous elastomeric phase, obtained by blending the components in the molten state and then dynamically curing the same, e.g. in an extruder through addition of a curing agent (ionic curing or peroxide curing). Thermoplastic polymer can be notably polyvinyliden fluoride; example 8 pertains to the preparation in a batch mixer of a TPV comprising 70 % wt vinylidene fluoride (VDF)/hexafluoropropylene (HFP) copolymer and 30 % wt of polyvinylidene fluoride by ionic curing.

Still, patent document US 5006594 (DUPONT DE NEMOURS) 4/9/1991 discloses new blends of fluorinated thermoplastic elastomers containing a two-phase composition including a continuous phase of a melt processable resin and a dispersed phase of an amorphous crosslinked fluoroelastomer. Homopolymers of vinyliden fluoride and copolymers of vinylidene fluoride in which the vinylidene fluoride is the greatly predominant polymerized monomer, are mentioned as possible thermoplastic fluororesin.

It is nevertheless well known that a wide variety of additional additives may be incorporated into the TPV compositions prior to the process of vulcanization in order to improve the processing and the final vulcanizate properties.

Thus, patent document US 7662886 (FRAUDENBERG-NOK GENERAL PARTNERSHIP) 1/4/2007 discloses TPV comprising a fluorocarbon elastomer and a fluorine thermoplastic polymeric material that may comprise optional additives such as plasticizers and processing oils. The fluorocarbon elastomer can notably be a copolymer of tetrafluoroethylene, ethylene and perfluoromethyl vinyl ether. The fluorine thermoplastic polymeric material can notably be a polyvinylidene fluoride. Suitable processing oils are polylinear $\alpha$-olefins. The addition of certain low to medium molecular weight organic esters, preferably having a molecular weight below about 600, to the compositions is disclosed to lower the Tg of the thermoplastic and rubber components, and of the overall composition, and to improve the low temperatures properties, particularly flexibility and strength.

Patent document US 2008/0032080 (DAIKIN AMERICA INC.) 6/1/2006 discloses fluoro-TPV comprising a fluorine-containing ethylenic polymer and a crosslinked fluororubber, which may further comprise polymers such as polyethylene, polypropylene, polyamide, polyester and polyurethane.

There is a continuous need in the art for TPV compositions having improved processability and better properties of the dynamic vulcanizate articles.

### Summary of invention

It is thus hereby provided a thermoplastic vulcanizate fluorine-containing composition [vulcanizate (C)], comprising a continuous thermoplastic fluoropolymer phase and a dispersed vulcanized fluoroelastomer phase, said composition comprising:

- at least one thermoplastic fluoropolymer [polymer (F)];
- at least one (per)fluoroelastomer [elastomer (A)], and
- at least one organic ester plasticizer [plasticizer (P)] selected from organic esters having a ratio between the weight percent absorption in elastomer (A) and the weight percent absorption in polymer (F) of at least 3, preferably of at

least 7.

The Applicant has surprisingly found that the incorporation in the vulcanizate (C) of the at least one plasticizer (P) as above detailed is particularly beneficial for improving the processability, stability and the performances of the vulcanizate, thus allowing to enlarge the application range of temperature.
In particular, the addition of at least one plasticizer (P) to the vulcanizate (C) allows to obtain a better surface finishing, to increase the flexibility and to decrease the minimum temperature of use of dynamic vulcanizate articles.
Moreover, the presence of the at least one plasticizer (P) in the vulcanizate (C) is beneficial for the storage or the use of the vulcanizate (C) at room temperature and below.
It is in fact well known by those skilled in the art that plasticizers have a limited solubility in highly crystalline polymers such as the thermoplastic fluororesin polyviniliden fluoride. This fact makes them prone to plasticizer leaching upon cooling from the molten state to room temperature or below.
The addition to a vulcanizate (C) of at least one plasticizer (P) as above detailed, which has the ability to be much more absorbed in elastomer (A) than in polymer (F), guarantees no leakage during long term storage or use at room temperature or below; in fact, the elastomer (A) can absorb the plasticizer eventually expulsed by the thermoplastic fluoropolymer, polymer (F). This helps to obtain dry vulcanizate (C) with large content of plasticizer, which can also be effective as processing aid.
Moreover, the addition to a vulcanizate (C) of at least one plasticizer (P) is beneficial to reduce the elastomer glass transition temperature.
Furthermore, the plasticizers (P) as above detailed are characterized by having high boiling points, which is beneficial to retain good elastomeric performances of the vulcanizate (C) during the application at high temperatures.
The invention further pertains to a precursor mixture [mixture (M)] of a thermoplastic vulcanizate fluorine-containing composition, said composition comprising:

- at least one thermoplastic fluoropolymer [polymer (F)];
- at least one (per)fluoroelastomer [elastomer (A)],
- at least one organic ester plasticizer [plasticizer (P)] selected from organic esters having a ratio between the weight percent absorption in elastomer (A) and the weight percent absorption in polymer (F) of at least 3, preferably at least of 7, and
- at least one curing system for the elastomer (A).

The invention further pertains to a method for manufacturing the vulcanizate (C), as above detailed, comprising dynamic curing of the precursor mixture (M), as above detailed.

## Description of embodiments

Polymer (F) is a thermoplastic, that is to say a polymer which softens on heating and hardens on cooling at room temperature, which at room temperature exists below its glass transition temperature if fully amorphous or below its melting point if semi-crystalline.
It is nevertheless generally preferred for the polymer (F) to be semi-crystalline, that is to say to have a definite melting point; preferred polymers (F) are those possessing a heat of fusion of at least 5 J/g, preferably of at least 10 J/g, more preferably at least 30 J/g. Without upper limit for heat of fusion being critical, it is nevertheless understood that polymer (F) will generally possess a heat of fusion of at most 55 J/g, preferably of at most 53 J/g, more preferably of at most 50 J/g.
Heat of fusion is generally determined by DSC according to ASTM D3418 standard.
Polymer (F) is fluorinated, that is to say it comprises recurring units derived from at least one fluorinated monomer [monomer (F)].
The polymer (F) is preferably a partially fluorinated fluoropolymer.
For the purpose of the present invention, the term "partially fluorinated fluoropolymer" is intended to denote a polymer comprising recurring units derived from at least one fluorinated monomer, wherein at least one of said fluorinated monomers comprise at least one hydrogen atom.
By the term "fluorinated monomer" it is hereby intended to denote an ethylenically unsaturated monomer comprising at least one fluorine atom.
The term "at least one fluorinated monomer" is understood to mean that the polymer (F) may comprise recurring units derived from one or more than one fluorinated monomers. In the rest of the text, the expression "fluorinated monomers" is understood, for the purposes of the present invention, both in the plural and the singular, that is to say that they denote both one or more than one fluorinated monomers as defined above.
The monomer (F) is generally selected from the group consisting of:

(a) $C_2$-$C_8$ perfluoroolefins, such as tetrafluoroethylene, and hexafluoropropene;

(b) $C_2$-$C_8$ hydrogenated fluoroolefins, such as vinyl fluoride, 1,2-difluoroethylene, vinylidene fluoride and trifluoroethylene;

(c) perfluoroalkylethylenes complying with formula $CH_2$=CH-$R_{f0}$, in which $R_{f0}$ is a $C_1$-$C_6$ perfluoroalkyl;

(d) chloro- and/or bromo- and/or iodo-$C_2$-$C_6$ fluoroolefins, like chlorotrifluoroethylene;

(e) (per)fluoroalkylvinylethers complying with formula $CF_2$=CFO$R_{f1}$ in which $R_{f1}$ is a $C_1$-$C_6$ fluoro- or perfluoroalkyl, e.g. $CF_3$, $C_2F_5$, $C_3F_7$ ;

(f) $CF_2$=CFO$X_0$ (per)fluoro-oxyalkylvinylethers, in which $X_0$ is a $C_1$-$C_{12}$ alkyl, or a $C_1$-$C_{12}$ oxyalkyl, or a $C_1$-$C_{12}$ (per)fluorooxyalkyl having one or more ether groups, like perfluoro-2-propoxy-propyl;

(g) (per)fluoroalkylvinylethers complying with formula $CF_2$=CFO$CF_2$O$R_{f2}$ in which $R_{f2}$ is a $C_1$-$C_6$ fluoro- or perfluoroalkyl, e.g. $CF_3$, $C_2F_5$, $C_3F_7$ or a $C_1$-$C_6$ (per)fluorooxyalkyl having one or more ether groups, like -$C_2F_5$ -O-$CF_3$;

(h) functional (per)fluoro-oxyalkylvinylethers complying with formula $CF_2$ =CFO$Y_0$, in which $Y_0$ is a $C_1$-$C_{12}$ alkyl or (per)fluoroalkyl, or a $C_1$-$C_{12}$ oxyalkyl, or a $C_1$-$C_{12}$ (per)fluorooxyalkyl having one or more ether groups and $Y_0$ comprising a carboxylic or sulfonic acid group, in its acid, acid halide or salt form;

(i) fluorodioxoles, of formula (I):

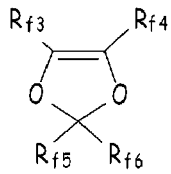

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. -$CF_3$, -$C_2F_5$, -$C_3F_7$, -$OCF_3$, -$OCF_2CF_2OCF_3$.

According to a first embodiment of the invention, the polymer (F) is a partially fluorinated fluoropolymer comprising recurring units derived from vinylidene fluoride (VDF), and, optionally, recurring units derived from at least one fluorinated monomer different from VDF.

The polymer (F) of this first preferred embodiment of the invention more preferably comprises:

- at least 60% by moles, preferably at least 75% by moles, more preferably at least 85% by moles of recurring units derived from vinylidene fluoride (VDF),
- optionally, from 0.1 % to 15% by moles, preferably from 0.1 % to 12% by moles, more preferably from 0.1 % to 10% by moles of recurring units derived from at least one fluorinated monomer different from VDF, all the aforementioned % by moles being referred to the total moles of recurring units of the polymer (F).

The said fluorinated monomer different from VDF is advantageously selected from vinyl fluoride (VF1), chlorotrifluoroethylene (CTFE), hexafluoropropylene (HFP), tetrafluoroethylene (TFE), trifluoroethylene (TrFE) and perfluoromethylvinylether (PMVE).

As non-limitative examples of polymers (F) useful in the present invention, mention can be notably made of homopolymers of VDF, VDF/TFE copolymers, VDF/CTFE copolymers and the like.

VDF homopolymers are particularly advantageous for being used as polymer (F) in the vulcanizate (C).

The polymer (F) is typically obtainable by emulsion polymerization or suspension polymerization.

The melt index of the polymer (F) is advantageously at least 0.01, preferably at least 0.05, more preferably at least 0.1 g/10 min and advantageously less than 50, preferably less than 30, more preferably less than 20 g/10 min, when measured in accordance with ASTM test No. 1238, run at 230°C, under a piston load of 2.16 kg.

The melt index of the polymer (F) is advantageously at least 1, preferably at least 2, more preferably at least 5 g/10 min and advantageously less than 70, preferably less than 50, more preferably less than 40 g/10 min, when measured in accordance with ASTM test No. 1238, run at 230°C, under a piston load of 5 kg.

The polymer (F) has advantageously a melting point ($T_{m2}$) advantageously of at least 120°C, preferably at least 125°C, more preferably at least 130°C and of at most 190°C, preferably at most 185°C, more preferably at most 180°C, when determined by DSC, at a heating rate of 10°C/min, according to ASTM D 3418.

For the purposes of this invention, the term "(per)fluoroelastomer" [elastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer) and, optionally, recurring units

derived from at least one ethylenically unsaturated monomer free from fluorine atom (hereafter, hydrogenated monomer).

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Non limitative examples of suitable (per)fluorinated monomers are notably:

- $C_2$-$C_8$ fluoro- and/or perfluoroolefins, such as tetrafluoroethylene (TFE), hexafluoropropene (HFP), pentafluoropropylene, and hexafluoroisobutylene;
- $C_2$-$C_8$ hydrogenated monofluoroolefins, such as vinyl fluoride, 1,2-difluoroethylene, vinylidene fluoride (VDF) and trifluoroethylene (TrFE);
- (per)fluoroalkylethylenes complying with formula $CH_2$=CH-$R_{f0}$, in which R $f_0$ is a $C_1$-$C_6$ (per)fluoroalkyl or a $C_1$-$C_6$ (per)fluorooxyalkyl having one or more ether groups ;
- chloro- and/or bromo- and/or iodo-$C_2$-$C_6$ fluoroolefins, like chlorotrifluoroethylene (CTFE);
- fluoroalkylvinylethers complying with formula $CF_2$=CFO$R_{f1}$ in which $R_{f1}$ is a $C_1$-$C_6$ fluoro- or perfluoroalkyl, e.g. -$CF_3$, -$C_2F_5$, -$C_3F_7$ ;
- hydrofluoroalkylvinylethers complying with formula $CH_2$=CFO$R_{f1}$ in which $R_{f1}$ is a $C_1$-$C_6$ fluoro- or perfluoroalkyl, e.g. -$CF_3$, -$C_2F_5$, -$C_3F_7$ ;
- fluoro-oxyalkylvinylethers complying with formula $CF_2$=CFO$X_0$, in which $X_0$ is a $C_1$-$C_{12}$ oxyalkyl, or a $C_1$-$C_{12}$ (per)fluorooxyalkyl having one or more ether groups, like perfluoro-2-propoxy-propyl;
- fluoroalkyl-methoxy-vinylethers complying with formula $CF_2$=CFO$CF_2$OR $f_2$ in which $R_{f2}$ is a $C_1$-$C_6$ fluoro- or perfluoroalkyl, e.g. -$CF_3$, -$C_2F_5$, -$C_3F_7$ or a $C_1$-$C_6$ (per)fluorooxyalkyl having one or more ether groups, like -$C_2F_5$-O-$CF_3$;
- functional fluoro-alkylvinylethers complying with formula $CF_2$=CFO$Y_0$, in which $Y_0$ is a $C_1$-$C_{12}$ alkyl or (per)fluoroalkyl, or a $C_1$-$C_{12}$ oxyalkyl or a $C_1$
- $C_{12}$ (per)fluorooxyalkyl, said $Y_0$ group comprising a carboxylic or sulfonic acid group, in its acid, acid halide or salt form;
- fluorodioxoles, of formula :

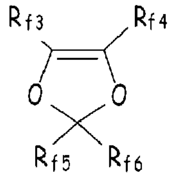

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. -$CF_3$, -$C_2F_5$, -$C_3F_7$, -$OCF_3$, -$OCF_2CF_2OCF_3$.

Examples of hydrogenated monomers are notably hydrogenated alpha-olefins, including ethylene, propylene, 1-butene, diene monomers, styrene monomers, alpha-olefins being typically used.

Elastomers (A) are in general amorphous products or products having a low degree of crystallinity (crystalline phase less than 20 % by volume) and a glass transition temperature (Tg) below room temperature. In most cases, the (per)fluoroelastomer has advantageously a $T_g$ below 10°C, preferably below 5°C, more preferably 0°C.

Elastomer (A) is preferably selected among:

(1) VDF-based copolymers, in which VDF is copolymerized with at least one comonomer selected from the group consisting of the followings classes, with the provision that such comonomer is different from VDF:

(a1) $C_2$-$C_8$ perfluoroolefins, such as tetrafluoroethylene (TFE), hexafluoropropylene (HFP), hexafluoroisobutylene;
(b1) hydrogen-containing $C_2$-$C_8$ olefins, such as $C_2$-$C_8$ non-fluorinated olefins (Ol); $C_2$-$C_8$ partially fluorinated olefins, vinyl fluoride (VF), trifluoroethylene (TrFE), perfluoroalkyl ethylenes of formula $CH_2$ = CH-$R_f$, wherein $R_f$ is a $C_1$-$C_6$ perfluoroalkyl group;
(c1) $C_2$-$C_8$ chloro and/or bromo and/or iodo-fluoroolefins such as chlorotrifluoroethylene (CTFE);
(d1) (per)fluoroalkylvinylethers of formula $CF_2$ = CFO$R_f$, wherein $R_f$ is a $C_1$ -$C_6$ (per)fluoroalkyl group; preferably perfluoroalkylvinylethers (PAVE) of above formula wherein $R_f$ is $C_1$-$C_6$ perfluoroalkyl group, e.g. $CF_3$, $C_2F_5$, $C_3F_7$;
(e1) (per)fluoro-oxy-alkylvinylethers of formula $CF_2$ = CFOX, wherein X is a $C_1$-$C_{12}$ ((per)fluoro)-oxyalkyl com-

prising catenary oxygen atoms, e.g. the perfluoro-2-propoxypropyl group;
(f1) (per)fluorodioxoles having formula :

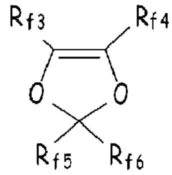

wherein $R_{f3}$, $R_{f4}$, $R_{f5}$, $R_{f6}$, equal or different from each other, are independently selected among fluorine atoms and $C_1$-$C_6$ (per)fluoroalkyl groups, optionally comprising one or more than one oxygen atom, such as notably $-CF_3$, $-C_2F_5$, $-C_3F_7$, $-OCF_3$, $-OCF_2CF_2OCF_3$; preferably, perfluorodioxoles;
(g1) (per)fluoro-methoxy-vinylethers (MOVE, hereinafter) having formula:

$$CFX^2 = CX^2OCF_2OR''_f$$

wherein $R''_f$ is selected among $C_1$-$C_6$ (per)fluoroalkyls, linear or branched; $C_5$-$C_6$ cyclic (per)fluoroalkyls; and $C_2$-$C_6$ (per)fluorooxyalkyls, linear or branched, comprising from 1 to 3 catenary oxygen atoms, and $X^2$ = F, H; preferably $X^2$ is F and $R''_f$ is $-CF_2CF_3$ (MOVE1); $-CF_2CF_2OCF_3$ (MOVE2); or $-CF_3$ (MOVE3);
(h1) $C_2$-$C_8$ non-fluorinated olefins (Ol), for example ethylene and propylene; and

(2) TFE-based copolymers, in which TFE is copolymerized with at least one comonomer selected from the group consisting of the classes (a1), (c1), (d1), (e1), (g1), (h1), and class (i2) below, with the provision that such comonomer is different from TFE:

(i2) perfluorovinyl ethers containing cyanide groups, such as notably those described in patents US 4 281 092, US 5 447 993 and US 5 789 489.

Most preferred Elastomers (A) are those having following compositions (in mol %):

(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %;
(ii) vinylidene fluoride (VDF) 50-80 %, perfluoroalkyl vinyl ethers (PAVE) 5-50 %, tetrafluoroethylene (TFE) 0-20 %;
(iii) vinylidene fluoride (VDF) 20-30 %, $C_2$-$C_8$ non-fluorinated olefins (Ol) 10-30 %, hexafluoropropene (HFP) and/or perfluoroalkyl vinyl ethers (PAVE) 18-27 %, tetrafluoroethylene (TFE) 10-30 %;
(iv) tetrafluoroethylene (TFE) 50-80 %, perfluoroalkyl vinyl ethers (PAVE) 20-50 %;
(v) tetrafluoroethylene (TFE) 45-65 %, $C_2$-$C_8$ non-fluorinated olefins (Ol) 20-55 %, vinylidene fluoride 0-30 %;
(vi) tetrafluoroethylene (TFE) 32-60 % mol %, $C_2$-$C_8$ non-fluorinated olefins (Ol) 10-40 %, perfluoroalkyl vinyl ethers (PAVE) 20-40 %, fluorovinyl ethers (MOVE) 0-30 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %;
(ix) tetrafluoroethylene (TFE) 20-70 %, fluorovinyl ethers (MOVE) 30-80 %, perfluoroalkyl vinyl ethers (PAVE) 0-50 %.

Optionally, Elastomer (A) of the present invention also comprises recurring units derived from a bis-olefin [bis-olefin (OF)] having general formula :

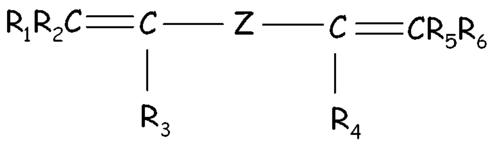

wherein $R_1$, $R_2$, $R_3$, $R_4$, $R_5$ and $R_6$, equal to or different from each other, are H, halogen, a group $R_{Alk}$ or $OR_{Alk}$, wherein $R_{Alk}$ is a branched or straight chain alkyl radical which can be partially, substantially or completely fluorinated or chlorinated; Z is a linear or branched $C_1$-$C_{18}$ alkylene or cycloalkylene radical, optionally containing oxygen atoms, preferably

at least partially fluorinated, or a (per)fluoropolyoxyalkylene radical, e.g. as described in EP 661304 A (AUSIMONT SPA) 7/5/1995.

The bis-olefin (OF) is preferably selected from the group consisting of those complying with formulae (OF-1), (OF-2) and (OF-3):

(OF-1)

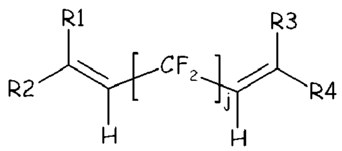

wherein j is an integer between 2 and 10, preferably between 4 and 8, and R1, R2, R3, R4, equal or different from each other, are H, F or $C_{1-5}$ alkyl or (per)fluoroalkyl group;

(OF-2)

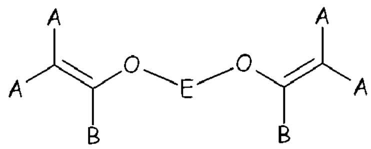

wherein each of A, equal or different from each other and at each occurrence, is independently selected from F, Cl, and H; each of B, equal or different from each other and at each occurrence, is independently selected from F, Cl, H and $OR_B$, wherein $R_B$ is a branched or straight chain alkyl radical which can be partially, substantially or completely fluorinated or chlorinated; E is a divalent group having 2 to 10 carbon atom, optionally fluorinated, which may be inserted with ether linkages; preferably E is a $-(CF_2)_m-$ group, with m being an integer from 3 to 5; a preferred bis-olefin of (OF-2) type is $F_2C=CF-O-(CF_2)_5-O-CF=CF_2$.

(OF-3)

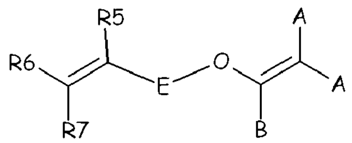

wherein E, A and B have the same meaning as above defined; R5, R6, R7, equal or different from each other, are H, F or $C_{1-5}$ alkyl or (per)fluoroalkyl group.

The weight ratio between polymer (F) and elastomer (A) is not particularly critical, provided that it is selected by routine experiments so as to deliver a continuous thermoplastic fluoropolymer phase and a dispersed vulcanized fluoroelastomer phase in the vulcanizate (C). Generally the weight ratio polymer (F)/elastomer (A) will be comprised between 10/90 wt/wt to 70/30 wt/wt, preferably 20/80 to 40/60 wt/wt. The skilled in the art will select most appropriate weight ratio in view of target final properties of the vulcanizate (C).

The vulcanizate (C) of the invention comprises at least one organic ester plasticizer (P) selected from organic esters which have a ratio between the weight percent absorption in elastomer (A) and the weight percent absorption in polymer (F) of at least 3, preferably of at least 7.

These organic esters are conveniently characterized by a low volatility.

The term "low volatility" as used herein is intended to describe organic esters having a boiling point at atmospheric pressure of above about 300°C.

In a preferred embodiment, the organic esters are aliphatic di- or tri-esters.

Particularly suitable organic esters include esters of citric acid and esters of sebacic acid.

In a preferred embodiment, the present invention provides a thermoplastic vulcanizate fluorine-containing composition [vulcanizate (C)], comprising a continuous thermoplastic fluoropolymer phase and a dispersed vulcanized fluoroelastomer phase, said composition comprising:

- at least one thermoplastic fluoropolymer [polymer (F)];

- at least one (per)fluoroelastomer [elastomer (A)], and
- at least one organic ester plasticizer [plasticizer (P)] selected from the group consisting of esters of citric acid and esters of sebacic acid.

In most preferred embodiments, the ester of citric acid is tributyl O-acetyl citrate and the ester of sebacic acid is dibutyl sebacate. Still more preferably, the plasticizer (P) is tributyl O-acetyl citrate.

The plasticizer (P) is present in the vulcanizate (C) of the invention in an amount of from 1 to 50 % wt, preferably of from 4 to 30 % wt, more preferably of from 5 to 20% wt, based on the weight of polymer (F).

Still, the vulcanizate (C) may comprise additional optional ingredients, such as extender oils, synthetic processing oils, stabilizers, at least one processing aid, fillers, pigments, adhesives, tackifiers, and waxes. Such additional ingredients might be blended into the precursor mixture (M), or can be later compounded into the vulcanizate (C) after dynamic curing.

Particularly suitable processing aids are polyolefinic process lubricants.

In a preferred embodiment, the present invention provides a thermoplastic vulcanizate fluorine-containing composition [vulcanizate (C)], comprising a continuous thermoplastic fluoropolymer phase and a dispersed vulcanized fluoroelastomer phase, said composition comprising:

- at least one thermoplastic fluoropolymer [polymer (F)];
- at least one (per)fluoroelastomer [elastomer (A)],
- at least one plasticizer (P)
- at least one organic ester plasticizer [plasticizer (P)] selected from organic esters having a ratio between the weight percent absorption in elastomer (A) and the weight percent absorption in polymer (F) of at least 3, preferably of at least 7;
  and
- at least one polyolefinic process lubricant [lubricant (L)].

The lubricant (L) can notably be selected from the group consisting of polyethylene, polypropylene and polybutylene. Preferably, the lubricant (L) is polyethylene.

The lubricant (L) can be present in the vulcanizate (C) of the invention in an amount of at most 10% wt, preferably of at most 5%wt, more preferably of at most 2% wt, still more preferably of at most 1 % wt, based on the weight of polymer (F).

The applicant has surprisingly found that the addition of a polyolefinic process lubricant together with a plasticizer (P) to the vulcanizate (C) has a synergistic effect in improving the processing conditions during the extrusion, by strongly decreasing the apparent viscosity of the vulcanizate (C).

The invention further pertains to a precursor mixture [mixture (M)] of a thermoplastic vulcanizate fluorine-containing composition, said mixture (M) comprising:

- at least one thermoplastic fluoropolymer [polymer (F)], as above detailed;
- at least one (per)fluoroelastomer [elastomer (A)], as above detailed,
- at least one organic ester plasticizer [plasticizer (P)] selected from organic esters having a ratio between the weight percent absorption in elastomer (A) and the weight percent absorption in polymer (F) of at least 3, preferably of at least 7; and
- at least one curing system for the elastomer (A).

All the features described above for components polymer (F), elastomer (A) and plasticizer (P), and for optional ingredients of the vulcanizate (C) are also applicable here as preferred embodiments of the mixture (M).

As mentioned, for obtaining the vulcanizate (C) of the present invention, the precursor mixture [mixture (M)] to be submitted to dynamic curing for obtaining the vulcanizate (C) further comprises at least one curing system for the elastomer (A).

It is thus understood that the vulcanizate (C) may thus additional comprise residues or decompositions products derived from said curing system, without this deviating from above detailed description.

The curing system can be effective for ionic curing, both based on polyhydroxylated or polyaminic compunds, peroxide curing and/or mixed curing of the elastomer (A).

The amount of the curing system is not particularly limited, provided that is present in an amount effective to ensure crosslinking of the elastomer (A) within the vulcanizate (C).

A curing system for peroxide curing generally comprises at least one peroxide (generally, an organic peroxide) that is capable of generating radicals by thermal decomposition, in an amount generally of between 0.1 and 10 and preferably between 0.5 and 5 weight parts per hundred parts of the elastomer (A). Among most commonly used agents,

mention can be made of: dialkyl peroxides, for instance di-tert-butyl peroxide and 2,5-dimethyl-2,5-bis(tert-butylperoxy)hexane; dicumyl peroxide; dibenzoyl peroxide; di-tert-butyl perbenzoate; bis[1,3-dimethyl-3-(tert-butylperoxy)butyl] carbonate.

Further, in addition, the curing system for peroxide curing comprises:

(a) at least one curing coagent, in an amount generally of between in an amount generally of between 0.5 and 10 and preferably between 1 and 7 weight parts per hundred parts of the elastomer (A); among these coagents, the following are commonly used: triallyl cyanurate; triallyl isocyanurate (TAIC); tris(diallylamine)-s-triazine; triallyl phosphite; N,N-diallylacrylamide; N,N,N',N'-tetraallylmalonamide; trivinyl isocyanurate; 2,4,6-trivinyl methyltrisiloxane; bis-olefins (OF), as above detailed; triazines, such as notably those described in European patent applications EP 860436 A (AUSIMONT SPA) 8/26/1998 and WO 97/05122 (DUPONT DE NEMOURS) 2/13/1997; among above mentioned curing coagents, bis-olefins (OF), as above detailed, and more specifically those of formula (OF-1), as above detailed, have been found to provide particularly good results;
(b) optionally, a metallic compound, in an amounts of advantageously 1 to 15 and preferably 2 to 10 weight parts per hundred parts of the elastomer (A), selected from the group consisting of oxides and hydroxides of divalent metals, for instance Mg, Zn, Ca or Pb, optionally combined with a salt of a weak acid, for instance Ba, Na, K, Pb, Ca stearates, benzoates, carbonates, oxalates or phosphites; (c) optionally, acid acceptors of the metal non-oxide type, such as 1,8-bis(dimethylamino)naphthalene, octadecylamine, etc.

When the vulcanizate (C) is obtained by peroxide curing, elastomer (A) preferably contains iodine and/or bromine atoms in the chain and/or at the end of the macromolecules. The introduction of these iodine and/or bromine atoms may be obtained:

- by addition during elastomer (A) manufacture to the polymerization medium of brominated and/or iodinated cure-site comonomers, such as bromo and/or iodo olefins containing from 2 to 10 carbon atoms, or iodo and/or bromo fluoroalkyl vinyl ethers, in amounts such that the content of cure-site comonomers in the elastomer (A) is generally between 0.05 and 2 mol per 100 mol of the other base monomer units; or
- via addition during elastomer (A) manufacture of iodinated and/or brominated chain-transfer agent(s) to the polymerization medium, for instance compounds of formula $R_f(I)_x(Br)_y$, in which $R_f$ is a (per)fluoroalkyl or a (per)fluorochloroalkyl containing from 1 to 8 carbon atoms, while x and y are integers between 0 and 2, with $1 \leq x+y \leq 2$ or alkali metal or alkaline-earth metal iodides and/or bromides.

A curing system for ionic curing generally comprises at least one curing agent and at least one accelerator, as well known in the art.

The amount of accelerator(s) is generally comprised between 0.05 and 5 weight parts per hundred parts of elastomer (A) (phr) and that of the curing agent typically between 0.5 and 15 phr and preferably between 1 and 6 phr.

Aromatic or aliphatic polyhydroxylated compounds, or derivatives thereof, may be used as curing agents. Among these, mention will be made in particular of dihydroxy, trihydroxy and tetrahydroxy benzenes, naphthalenes or anthracenes; bisphenols, in which the two aromatic rings are linked together via an aliphatic, cycloaliphatic or aromatic divalent radical, or alternatively via an oxygen or sulphur atom, or else a carbonyl group. The aromatic rings may be substituted with one or more chlorine, fluorine or bromine atoms, or with carbonyl, alkyl or acyl groups. Bisphenol AF is particularly preferred.

Examples of accelerators that may be used include: quaternary ammonium or phosphonium salts; aminophosphonium salts; phosphoranes; the imine compounds; etc. Quaternary phosphonium salts and aminophosphonium salts are preferred.

Instead of using the accelerator and the curing agent separately, it is also possible for the curing system for ionic curing to comprise an adduct between an accelerator and a curing agent in a mole ratio of from 1:2 to 1:5 and preferably from 1:3 to 1:5, the accelerator being one of the organic onium compounds having a positive charge, as defined above, and the curing agent being chosen from the compounds indicated above, in particular dihydroxy or polyhydroxy or dithiol or polythiol compounds; the adduct being obtained by melting the product of reaction between the accelerator and the curing agent in the indicated mole ratios, or by melting the mixture of the 1:1 adduct supplemented with the curing agent in the indicated amounts. Optionally, an excess of the accelerator, relative to that contained in the adduct, may also be present.

The following are particularly preferred as cations for the preparation of the adduct: 1,1-diphenyl-1-benzyl-N-diethylphosphoranamine and tetrabutylphosphonium; particularly preferred anions are bisphenol compounds in which the two aromatic rings are bonded via a divalent radical chosen from perfluoroalkyl groups of 3 to 7 carbon atoms, and the OH groups are in the para position.

Other ingredients optionally comprised in the curing system for ionic curing are:

i) one or more mineral acid acceptors, generally chosen from those known in the ionic curing of elastomers, preferably selected from the group consisting of oxides of divalent metals, preferably oxides of Mg, Zn, Ca or Pb, typically comprised in amounts of 1-40 phr of elastomer (A);

ii) one or more basic compounds chosen from those known in the ionic curing of elastomers, commonly selected from the group consisting of hydroxides of divalent metals (preferably: $Ca(OH)_2$, $Sr(OH)_2$, $Ba(OH)_2$), metal salts of weak acids, for instance Ca, Sr, Ba, Na and K carbonates, benzoates, oxalates and phosphites and mixtures of the above mentioned hydroxides with the above mentioned metal salts, typically added in amounts of from 0.5 to 10 phr of elastomer (A).

The invention further pertains to a method for manufacturing the vulcanizate (C), as above detailed, comprising dynamic curing of the mixture (M), as above detailed.

The method generally comprises heating the mixture (M) in an extruder or a mixer at a temperature above the crystalline melting point of the polymer (F), if polymer (F) is semi-crystalline, or above its glass transition temperature if polymer (F) is amorphous and vulcanizing the elastomer (A) while exerting a mixing shearing force preferably in the range between 150 °C and 350 °C, more preferably in the range between 175 °C and 275°C .

Preferred devices for carrying out the method of the invention are extruders. In such embodiments, ingredients of the mixture (M) can be pre-mixed all together and e.g. fed to the extruder through a single hopper, or can be fed to the extruder through separated feeders. The premixing of the ingredients can be done by any equipment suitable for the ingredients of the mixture (M). Without limiting the scope of the invention, it is generally preferred to add the above described curing system for the elastomer (A) through a separate feeder, which will deliver said curing system in the molten mass of elastomer (A) and fluoropolymer (F).

The vulcanizate (C), pure or compounded with other additional optional ingredients, e.g. fillers, can be used to make tubes, strips or filaments, as well as the vulcanizate (C) can be appropriately moulded into parts having different shapes.

The vulcanizates (C) of the invention can be used as sealing material, e.g. in the chemical and semiconductor industries, and are suitable for fabricating O-rings, V-rings, gaskets and diaphragms.

In the electrical and wire/cable industries, vulcanizates (C) can be used for wire coating and wire/cable sheathing due to their flexibility, low flammability and oil, fuel and chemical resistance.

Should the disclosure of any patents, patent applications, and publications which are incorporated herein by reference conflict with the description of the present application to the extent that it may render a term unclear, the present description shall take precedence.

The invention will be now described with reference to the following examples, whose purpose is merely illustrative and not intended to limit scope of the invention.

## EXAMPLES

### RAW MATERIALS

Fluoroelastomer compound A1 contains 100 parts by weight of a vinylidene fluoride/hexafluoropropoylene copolymer having 66% fluorine content, 2 parts by weight of Bisphenol AF (CAS-No 1478-61-1) and 0.4 parts by weight of Benzyl(diethylamino) diphenylphosphonium chloride (CAS-No 82857-68-9) (ELASTOMER (A1), herein after).

Fluoroelastomer compound A2 contains 100 parts by weight of a vinylidene fluoride/hexafluoropropylene /tetrafluorethylene terpolymer having 68.5 % fluorine content, 2.5 parts by weight of Bisphenol AF (CAS-No 1478-61-1), 0.5 part of Benzyl(diethylamino) diphenylphosphonium chloride (CAS-No 82857-68-9) and 0.4 parts by weight of benzyltriphenylphosphonium chloride (CAS-No. : 1100-88-5) (ELASTOMER (A2), herein after).

SOLEF® 1008 is a standard homopolymer of VDF with low-medium viscosity and Tm = 172°C, commercially available from Solvay (POLYMER (F), herein after).

TRIBUTYL O-ACETYLCITRATE, commercially available as Citroflex A4 from Vertellus Specialties (ATBC, herein after).

DIBUTYL SEBACATE, commercially available from Sigma Aldrich (DBS, herein after).

HIGH DENSITY POLYETHYLENE Eltex 4070A, commercially available from Ineos (LUBRICANT, herein after).

### ROOM TEMPERATURE ABSORPTION OF PLASTICIZER (P) IN POLYMER (F) AND IN ELASTOMER (A).

Plasticizer absorption has been measured at 23 °C, after reaching the absorption equilibrium, on 1-mm thick compression moulded slabs of Polymer (F) and fully cured slabs of Elastomer (A1) or (A2).

The elastomer slabs have been moulded, after the addition of 3 phr of $Ca(OH)_2$ and 6 phr of MgO, at 170 °C for 10 minutes. Then the Elastomer slabs were post-cured in an oven according to the following protocol: first, a temperature ramp of 8 hours from room temperature to 250 °C, followed by 16 hours at 250 °C.

The plasticizer absorption by the slabs has been evaluated by following the ASTM D543 Practice A, wherein:

- for the evaluation of the absorption in Polymer (F), the polymer slab was first immersed at 120 °C in the plasticizer till reaching constant weight, then the slab was equilibrated at 23 °C in the plasticizer till reaching a constant weight.
- for the evaluation of the absorption in Elastomer (A) the cured slab was first immersed at 80 °C in the plasticizer till reaching a constant weight, then the slab was equilibrated at 23 °C in the plasticizer till reaching a constant weight.

The weight percent absorption (Δm%) is calculated as:

$$\Delta m\% = \frac{m_{final} - m_{initial}}{m_{initial}} * 100$$

*minitial* is the specimen weight before the absorption process, *mfinal* is the specimen weight after the liquid absorption process.

Results are summarized in the following Table 1, from which clearly results that the plasticizers of the invention are much more soluble in the elastomers (A1) and (A2) than in the thermoplastic polymer (F).

**Table 1**

| | **PLASTICIZER (P)** | |
|---|---|---|
| | DBS | ATBC |
| | Δm% | Δm% |
| **Polymer (F)** | 3.0 | 4.9 |
| **Elastomer (A1)** | 122 | 137 |
| **Elastomer (A2)** | 32 | 35 |

**MANUFACTURE OF THERMOPLASTIC VULCANIZATE COMPOSITIONS COMPRISING PLASTICIZER (P) IN INTERNAL MIXER**

Thermoplastic vulcanizates X1 to X3 were prepared in two steps using a Brabender internal mixer EHT 50.

The first step consisted in the preparation of an elastomer masterbatch by adding 3 phr of calcium hydroxide and 6 phr of magnesium oxide to either the formulated elastomer (A1) or (A2). The elastomer masterbatches were prepared using universal rollers, cooling the mixer to keep the temperature always below 70°C. The mixing time was twenty minutes.

In the second step, the internal mixer temperature was set at 200 °C. About 18 grams of polymer (F) were poured into the mixer and melted for 5 minutes at 30 rpm. For the preparation of compositions 1 to 8 the plasticizer (P) was slowly added at this point to the molten polymer (F). Then about 42 grams of elastomer masterbatches, cut in small pieces of 10-15 mm, were added. The mixing was continued for 20 more minutes, recording the torque and the temperature.

Finally, the vulcanizates were manually removed from the mixer and grinded in liquid nitrogen.

The higher solubility of the plasticizer in the elastomer component than in the fluoropolymer component was further confirmed by the DSC of the thermoplastic vulcanizates as both their melting point and glass transition temperature (Tg) of Polymer (F) are substantially unchanged by the addition of the plasticizer while the glass transition of the elastomer (A2) decreases upon plasticizer addition (Table 2). The combination of the constant melting temperature and the decrease of the rubber glass transition implies an enlargement of the application range of the thermoplastic vulcanizate upon addition of the plasticizer.

**Table 2**

| | **Elastome r(A2)/Polymer (F)** | **ATBC** | **Melting Point Polymer(F)*** | **Tg Elastomer(A2)*** | **Tg Polymer (F)*** |
|---|---|---|---|---|---|
| | [%] | | [°C] | [°C] | [°C] |
| **X1** | 70/30 | 0% | 173 | -10 | -45 |

(continued)

| | Elastome r(A2)/Polymer (F) | ATBC | Melting Point Polymer(F)* | Tg Elastomer(A2)* | Tg Polymer (F)* |
|---|---|---|---|---|---|
| | [%] | | [°C] | [°C] | [°C] |
| **X2** | 64/27 | 5% | 171 | -15 | -45 |
| **X3** | 64/27 | 9% | 171 | -19 | -44 |
| *Evaluated according to ASTM D3418 | | | | | |

**MANUFACTURE OF THERMOPLASTIC VULCANIZATE COMPOSITIONS COMPRISING PLASTICIZER (P) IN TWIN SCREWS EXTRUDER**

Thermoplastic vulcanizates were produced in a twin screws extruder Leistriz ZSE27HP-40D having a screw diameter of 27 mm and a length-to-diameter ratio of 40.

Two gravimetric feeders were used to feed the elastomer (A1) or (A2) and the thermoplastic polymer (F) into the extruder. In the first feeder a masterbatch composed of the formulated elastomer (A1) or (A2) and of a part of the thermoplastic polymer (F) were put. The second feeder was used to feed a dry powder mix composed of the remaining amount of the thermoplastic polymer (F) and the inorganic bases (3 phr of calcium hydroxide and 6 phr of magnesium oxide).

In the preparation of compositions 1-10, the plasticizer was at this stage added by a peristaltic pump in the initial feeding zone.

The temperature of the different extrusion zones was set in a range from 140 to 230 °C. The screw was operated at 40 to 60 rpm. The overall throughput was kept at 4 to 10 kg/h.

The extrudate was cooled in water and then pelletized.

Composition recipes are summarized in the following Table 3:

**Table 3**

| | Elastomer (A1) [phr] | Elastomer (A2) [phr] | Polymer (F) [phr] | DBS [phr] | ATB C [phr] |
|---|---|---|---|---|---|
| **1** | 100 | | 43 | - | 9 |
| **2** | 100 | | 43 | - | 18 |
| **3** | 100 | | 43 | - | 31 |
| **4** | 100 | | 43 | 9 | - |
| **5** | 100 | | 43 | 17 | - |
| **6** | 100 | | 43 | 20 | - |
| **7** | | 100 | 43 | - | 7 |
| **8** | | 100 | 43 | - | 13 |
| **9** | | 100 | 43 | 9 | - |
| **10** | | 100 | 43 | 16 | - |
| **Comparative 1** | 100 | | 43 | - | - |
| **Comparative 2** | | 100 | 43 | - | - |

**EFFECT OF PLASTICIZER (P) ON HARDNESS, MODULUS AND COMPRESSION SET PROPERTIES OF VULCANIZATES (C)**

Effect of Plasticizer (P) on hardness, modulus and Compression Set properties are summarized in the following Table 4 for the vulcanizate (C) compositions 1-6, 9-10, Comparative 1 and Comparative 2:

Table 4

| | Hardness Shore A* | 100% Modulus ** (MPa) | C Set 23°C *** (%) | C Set 120°C *** (%) | Weight loss @23°C **** (%) |
|---|---|---|---|---|---|
| **1** | 85 | | 22 | 31 | 0.03 |
| **2** | 82 | 8.7 | 21 | 30 | 0.04 |
| **3** | 80 | | 27 | 47 | -0.07 |
| **4** | 87 | | 23 | 30 | 0.00 |
| **5** | 81 | 8.2 | 21 | 41 | -0.04 |
| **6** | 78 | | 23 | 39 | 0.00 |
| **9** | 84 | | 19 | 33 | 0.00 |
| **10** | 82 | 8.5 | 19 | 36 | 0.02 |
| **Comparative 1** | 92 | 12.4 | 29 | 34 | 0.00 |
| **Comparative 2** | 92 | 12.8 | 36 | 39 | 0.00 |

*ASTM D2240
** ASTM D638 type V at 50 mm/min; the 100 % modulus is defined as the measured stress at 100 % elongation.
*** ASTM D395 method B. Type 2 specimen. Test duration: 22 hours.
**** The weight loss is measured by the weight difference of the Compression Set specimens before and after the Compression Set test. The initial weight was measured on as-moulded specimens, while before the final weight measurement, the specimens were gently wiped off with a lint-free cloth to remove any exuded material. All these operations have been performed at 23 °C and 50 % Relative Humidity.

As shown above, the incorporation of plasticizer (P) in the vulcanizate (C) has been demonstrated to provide improved flexibility of the vulcanizate (C). Moreover, the Compression Set at 23°C is improved by the addition of the plasticizers, thus allowing the possibility to decrease the minimum temperature of use of the dynamic vulcanizate. The compositions reported in Table 4 show good values of the compression set measured at 120°C.

In addition, the observed variation of the specimen weight before and after the Compression Set testing at 23 °C is negligible. This is a proof of the dryness of the thermoplastic vulcanizates prepared according to the present invention.

## EFFECT OF PLASTICIZER (P) ON THE PROCESSABILITY OF VULCANIZATES (C)

Effect of Plasticizer (P) on extrusion pressure are summarized in the following Table 5 for the vulcanizate (C) compositions 1-10, Comparative 1 and Comparative 2:

Table 5

| | PRESSURE (Bar) |
|---|---|
| **1** | 73 |
| **2** | 38 |
| **3** | 9 |
| **4** | 79 |
| **5** | 44 |
| **6** | 32 |
| **7** | 70 |
| **8** | 50 |
| **9** | 74 |

(continued)

| | PRESSURE (Bar) |
|---|---|
| **10** | 44 |
| **Comparative 1** | 117 |
| **Comparative 2** | 137 |

As shown above, the incorporation of a plasticizer (P) into vulcanizate (C) has been demonstrated to provide improved processability in terms of decreased extrusion pressure.

**MANUFACTURE OF THERMOPLASTIC VULCANIZATE COMPOSITIONS COMPRISING PLASTICIZER (P) AND POLYOLEFINIC PROCESS LUBRICANT IN TWIN SCREWS EXTRUDER**

Thermoplastic vulcanizates were produced in a twin screws extruder Leistriz ZSE27HP-40D having a screw diameter of 27 mm and a length-to-diameter ratio of 40.

Two gravimetric feeders were used to feed the elastomer (A1) or (A2) and the thermoplastic polymer (F) into the extruder. In the first feeder a masterbatch composed of the formulated elastomer (A1) or (A2) and of a part of the thermoplastic polymer (F) were put. The second feeder was used to feed a dry powder mix composed of the remaining amount of the thermoplastic polymer (F), the polyolefinic process lubricant (for compositions 13-16) and the inorganic bases (3 phr of calcium hydroxide and 6 phr of magnesium oxide).

The plasticizer was added by a peristaltic pump in the initial feeding zone.

The temperature of the different extrusion zones was set in a range from 140 to 230 °C. The screw was operated at 40 to 60 rpm. The overall throughput was kept at 4 to 10 kg/h.

The extrudate was cooled in water and then pelletized.

Composition recipes, torque, pressure during extrusion and melt viscosity from capillary rheometry at three shear rates are summarized in the following Table 6.

The melt viscosity was calculated according to ASTM 3835 at 230 °C, using a Goettfert Rheograph 2003 capillary rheometer. The instrument was equipped with a circular die (Diameter= 1 mm; L/D = 20) with 90° entrance angle. No correction was applied to the viscosity. Viscosity was calculated at 10 1/s, 100 1/s and 2000 1/s.

**Table 6**

| | Elastomer (A2) / Polymer (F) | ATBC [%] | Lubricant [%] | Torque [%] | Pressure [bar] | Melt Viscosity (Pa sec) | | |
|---|---|---|---|---|---|---|---|---|
| | | | | | | 10 $s^{-1}$ | 100 $s^{-1}$ | 2000 $s^{-1}$ |
| **11** | 70/30 | 0 | 0 | 21 | 130 | 23639 | 3822 | 401 |
| **12** | 70/30 | 8.4 | 0 | 21 | 50 | 11069 | 2514 | 257 |
| **13** | 70/30 | 0 | 0.3 | 19 | 75 | 8709 | 1868 | 410 |
| **14** | 70/30 | 0 | 0.6 | 19 | 65 | | | |
| **15** | 70/30 | 0 | 1 | 19 | 60 | 6178 | 1804 | 363 |
| **16** | 70/30 | 8.1 | 0.6 | 16 | 22 | 3089 | 603 | 184 |

As shown above, the incorporation of a plasticizer (P) and of a polyolefinic process lubricant has a synergistic effect on extrusion parameters (pressure and torque) and on the viscosity of the vulcanizate (C).

## Claims

1. A thermoplastic vulcanizate fluorine-containing composition [vulcanizate (C)], comprising a continuous thermoplastic fluoropolymer phase and a dispersed vulcanized fluoroelastomer phase, said composition comprising:

- at least one thermoplastic fluoropolymer [polymer (F)];
- at least one (per)fluoroelastomer [elastomer (A)], and
- at least one organic ester plasticizer [plasticizer (P)] selected from organic esters having a ratio between the weight percent absorption in elastomer (A) and the weight percent absorption in polymer (F) of at least 3, preferably of at least 7.

**2.** The vulcanizate (C) of claim 1, wherein the polymer (F) is semi-crystalline polymer possessing a heat of fusion of at least 5 J/g, preferably of at least 10 J/g, more preferably at least 30 J/g and/or possessing a heat of fusion of at most 55 J/g, preferably of at most 53 J/g, more preferably of at most 50 J/g.

**3.** The vulcanizate (C) of claim 1 or 2, wherein the polymer (F) comprises recurring units derived from at least one fluorinated monomer [monomer (F)] selected from the group consisting of:

(a) $C_2$-$C_8$ perfluoroolefins, such as tetrafluoroethylene, and hexafluoropropene;
(b) $C_2$-$C_8$ hydrogenated fluoroolefins, such as vinyl fluoride, 1,2-difluoroethylene, vinylidene fluoride and trifluoroethylene;
(c) perfluoroalkylethylenes complying with formula $CH_2$=CH-$R_{f0}$, in which $R_{f0}$ is a $C_1$-$C_6$ perfluoroalkyl;
(d) chloro- and/or bromo- and/or iodo-$C_2$-$C_6$ fluoroolefins, like chlorotrifluoroethylene;
(e) (per)fluoroalkylvinylethers complying with formula $CF_2$=$CFOR_{f1}$ in which R $f_1$ is a $C_1$-$C_6$ fluoro- or perfluoroalkyl, e.g. $CF_3$, $C_2F_5$, $C_3F_7$;
(f) $CF_2$=$CFOX_0$ (per)fluoro-oxyalkylvinylethers, in which $X_0$ is a $C_1$-$C_{12}$ alkyl, or a $C_1$-$C_{12}$ oxyalkyl, or a $C_1$-$C_{12}$ (per)fluorooxyalkyl having one or more ether groups, like perfluoro-2-propoxy-propyl;
(g) (per)fluoroalkylvinylethers complying with formula $CF_2$=$CFOCF_2OR_{f2}$ in which $R_{f2}$ is a $C_1$-$C_6$ fluoro- or perfluoroalkyl, e.g. $CF_3$, $C_2F_5$, $C_3F_7$ or a $C_1$-$C_6$ (per)fluorooxyalkyl having one or more ether groups, like -$C_2F_5$-O-$CF_3$;
(h) functional (per)fluoro-oxyalkylvinylethers complying with formula $CF_2$ =$CFOY_0$, in which $Y_0$ is a $C_1$-$C_{12}$ alkyl or (per)fluoroalkyl, or a $C_1$-$C_{12}$ oxyalkyl, or a $C_1$-$C_{12}$ (per)fluorooxyalkyl having one or more ether groups and $Y_0$ comprising a carboxylic or sulfonic acid group, in its acid, acid halide or salt form;
(i) fluorodioxoles, of formula (I):

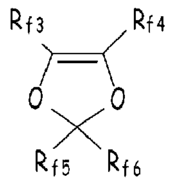

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. -$CF_3$, -$C_2F_5$, -$C_3F_7$, -OCF $_3$, -$OCF_2CF_2OCF_3$.

**4.** The vulcanizate (C) of anyone of the preceding claims, wherein polymer (F) comprises:

- at least 60% by moles, preferably at least 75% by moles, more preferably at least 85% by moles of recurring units derived from vinylidene fluoride (VDF),
- optionally, from 0.1% to 15% by moles, preferably from 0.1% to 12% by moles, more preferably from 0.1% to 10% by moles of recurring units derived from at least one fluorinated monomer different from VDF, said fluorinated monomer being selected from the group consisting of vinyl fluoride (VF1), chlorotrifluoroethylene (CTFE), hexafluoropropylene (HFP), tetrafluoroethylene (TFE), trifluoroethylene (TrFE) and perfluoromethylvinylether (PMVE),

all the aforementioned % by moles being referred to the total moles of recurring units of the polymer (F).

**5.** The vulcanizate (C) of claim 4, wherein polymer (F) is a VDF homopolymer, a VDF/TFE copolymer or a VDF/CTFE copolymer.

**6.** The vulcanizate (C) of anyone of the preceding claims, wherein elastomer (A) comprising more than 10 % wt, preferably more than 30 % wt, of recurring units derived from at least one ethylenically unsaturated monomer comprising at least one fluorine atom (hereafter, (per)fluorinated monomer) and, optionally, recurring units derived

from at least one ethylenically unsaturated monomer free from fluorine atom (hereafter, hydrogenated monomer), wherein said (per)fluorinated monomers is selected from the group consisting of:

- $C_2$-$C_8$ fluoro- and/or perfluoroolefins, such as tetrafluoroethylene (TFE), hexafluoropropene (HFP), pentafluoropropylene, and hexafluoroisobutylene;
- $C_2$-$C_8$ hydrogenated monofluoroolefins, such as vinyl fluoride, 1,2-difluoroethylene, vinylidene fluoride (VDF) and trifluoroethylene (TrFE);
- (per)fluoroalkylethylenes complying with formula $CH_2$=CH-$R_{f0}$, in which $R_{f0}$ is a $C_1$-$C_6$ (per)fluoroalkyl or a $C_1$-$C_6$ (per)fluorooxyalkyl having one or more ether groups ;
- chloro- and/or bromo- and/or iodo-$C_2$-$C_6$ fluoroolefins, like chlorotrifluoroethylene (CTFE);
- fluoroalkylvinylethers complying with formula $CF_2$=CFOR$_{f1}$ in which $R_{f1}$ is a C $_1$-$C_6$ fluoro- or perfluoroalkyl, e.g. -$CF_3$, -$C_2F_5$, -$C_3F_7$ ;
- hydrofluoroalkylvinylethers complying with formula $CH_2$=CFOR$_{f1}$ in which $R_{f1}$ is a $C_1$-$C_6$ fluoro- or perfluoroalkyl, e.g. -$CF_3$, -$C_2F_5$, -$C_3F_7$ ;
- fluoro-oxyalkylvinylethers complying with formula $CF_2$=CFOX$_0$, in which $X_0$ is a $C_1$-$C_{12}$ oxyalkyl, or a $C_1$-$C_{12}$ (per)fluorooxyalkyl having one or more ether groups, like perfluoro-2-propoxy-propyl;
- fluoroalkyl-methoxy-vinylethers complying with formula $CF_2$=CFOCF$_2$OR$_{f2}$ in which $R_{f2}$ is a $C_1$-$C_6$ fluoro- or perfluoroalkyl, e.g. -$CF_3$, -$C_2F_5$, -$C_3F_7$ or a $C_1$-C $_6$ (per)fluorooxyalkyl having one or more ether groups, like -$C_2F_5$-O-$CF_3$;
- functional fluoro-alkylvinylethers complying with formula $CF_2$=CFOY$_0$, in which $Y_0$ is a $C_1$-$C_{12}$ alkyl or (per)fluoroalkyl, or a $C_1$-$C_{12}$ oxyalkyl or a $C_1$-$C_{12}$ (per)fluorooxyalkyl, said $Y_0$ group comprising a carboxylic or sulfonic acid group, in its acid, acid halide or salt form;
- fluorodioxoles, of formula :

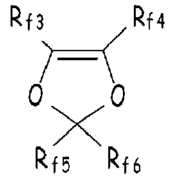

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. -$CF_3$, -$C_2F_5$, -$C_3F_7$, -OCF $_3$, -$OCF_2CF_2OCF_3$.

**7.** The vulcanizate (C) of anyone of the preceding claims, wherein elastomer (A) is selected among:

(1) VDF-based copolymers, in which VDF is copolymerized with at least one comonomer selected from the group consisting of the followings classes, with the provision that such comonomer is different from VDF:

(a1) $C_2$-$C_8$ perfluoroolefins, such as tetrafluoroethylene (TFE), hexafluoropropylene (HFP), hexafluoroisobutylene;
(b1) hydrogen-containing $C_2$-$C_8$ olefins, such as $C_2$-$C_8$ non-fluorinated olefins (Ol); $C_2$-$C_8$ partially fluorinated olefins, vinyl fluoride (VF), trifluoroethylene (TrFE), perfluoroalkyl ethylenes of formula $CH_2$ = CH-$R_f$, wherein $R_f$ is a $C_1$-$C_6$ perfluoroalkyl group;
(c1) $C_2$-$C_8$ chloro and/or bromo and/or iodo-fluoroolefins such as chlorotrifluoroethylene (CTFE);
(d1) (per)fluoroalkylvinylethers of formula $CF_2$ = CFOR$_f$, wherein $R_f$ is a $C_1$-$C_6$ (per)fluoroalkyl group; preferably perfluoroalkylvinylethers (PAVE) of above formula wherein $R_f$ is $C_1$-$C_6$ perfluoroalkyl group, e.g. $CF_3$, $C_2F_5$, $C_3F_7$;
(e1) (per)fluoro-oxy-alkylvinylethers of formula $CF_2$ = CFOX, wherein X is a $C_1$ -$C_{12}$ ((per)fluoro)-oxyalkyl comprising catenary oxygen atoms, e.g. the perfluoro-2-propoxypropyl group;
(f1) (per)fluorodioxoles having formula :

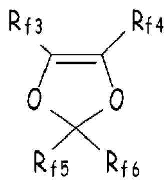

wherein $R_{f3}$, $R_{f4}$, $R_{f5}$, $R_{f6}$, equal or different from each other, are independently selected among fluorine atoms and $C_1$-$C_6$ (per)fluoroalkyl groups, optionally comprising one or more than one oxygen atom, such as notably $-CF_3$, $-C_2F_5$, $-C_3F_7$, $-OCF_3$, $-OCF_2CF_2OCF_3$; preferably, perfluorodioxoles;

(g1) (per)fluoro-methoxy-vinylethers (MOVE, hereinafter) having formula:

$$CFX^2 = CX^2OCF_2OR''_f$$

wherein $R''_f$ is selected among $C_1$-$C_6$ (per)fluoroalkyls, linear or branched; $C_5$ -$C_6$ cyclic (per)fluoroalkyls; and $C_2$-$C_6$ (per)fluorooxyalkyls, linear or branched, comprising from 1 to 3 catenary oxygen atoms, and $X^2$ = F, H; preferably $X^2$ is F and $R''_f$ is $-CF_2CF_3$ (MOVE1); $-CF_2CF_2OCF_3$ (MOVE2); or $-CF_3$ (MOVE3);

(h1) $C_2$-$C_8$ non-fluorinated olefins (Ol), for example ethylene and propylene; and

(2) TFE-based copolymers, in which TFE is copolymerized with at least one comonomer selected from the group consisting of the classes (a1), (c1), (d1), (e1), (g1), (h1), and class (i2) below, with the provision that such comonomer is different from TFE:

(i2) perfluorovinyl ethers containing cyanide groups.

**8.** The vulcanizate (C) according to anyone of the preceding claims, wherein the weight ratio between polymer (F) and elastomer (A) is comprised between 10/90 wt/wt to 70/30 wt/wt, preferably 20/80 to 40/60 wt/wt.

**9.** The vulcanizate (C) according to anyone of the preceding claims, wherein the plasticizer (P) is selected from the group consisting of esters of citric acid and esters of sebacic acid [plasticizer (P)].

**10.** The vulcanizate (C) according to claim 9, wherein the plasticizer (P) is tributyl O-acetyl citrate or dibutyl sebacate.

**11.** The vulcanizate (C) according to anyone of the preceding claims, wherein the plasticizer (P) is present in an amount of from 1 to 50 % wt, preferably of from 4 to 30 % wt, more preferably of from 5 to 20% wt, based on the weight of polymer (F).

**12.** The vulcanizate (C) according to anyone of the preceding claims which further comprises a polyolefinic process lubricant, preferably selected from the group consisting of polyethylene, polypropylene and polybutylene.

**13.** The vulcanizate (C) according to claim 13, wherein the polyolefinic process lubricant is present in an amount of at most 10% wt, preferably of at most 5% wt, more preferably of at most 2% wt, still more preferably of at most 1 % wt, based on the weight of polymer (F).

**14.** A precursor mixture [mixture (M)] of a thermoplastic vulcanizate fluorine-containing composition, said mixture (M) comprising:

- at least one thermoplastic fluoropolymer [polymer (F)];
- at least one (per)fluoroelastomer [elastomer (A)],
- at least one organic ester plasticizer [plasticizer (P)] selected from organic esters having a ratio between the weight percent absorption in elastomer (A) and the weight percent absorption in polymer (F) of at least 3, preferably of at least 7; and
- at least one curing system for the elastomer (A).

**15.** A method for manufacturing the vulcanizate (C) according to anyone of claims 1 to 13, comprising dynamic curing of the precursor mixture of claim 14.

Europäisches Patentamt
European Patent Office
Office européen des brevets

# EUROPEAN SEARCH REPORT

Application Number
EP 17 15 3299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2015/014699 A1 (SOLVAY SPECIALTY POLYMERS IT [IT]) 5 February 2015 (2015-02-05) * claims 1-9 * * paragraph [0033] - paragraph [0035] * * paragraph [0012] * ----- | 1-15 | INV. C08L27/12 |
| Y | EP 1 904 573 A1 (SOLVAY SOLEXIS SPA [IT]) 2 April 2008 (2008-04-02) * examples 5,6 * * paragraph [0133] - paragraph [0137] * ----- | 1-15 | |

TECHNICAL FIELDS SEARCHED (IPC)
C08L

The present search report has been drawn up for all claims

1

| Place of search | Date of completion of the search | Examiner |
|---|---|---|
| The Hague | 30 May 2017 | Fischer, Brigitte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 15 3299

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2017

| Patent document cited in search report | Publication date | Patent family member(s) | Publication date |
|---|---|---|---|
| WO 2015014699 A1 | 05-02-2015 | CN 105431464 A | 23-03-2016 |
| | | EP 3027664 A1 | 08-06-2016 |
| | | JP 2016525617 A | 25-08-2016 |
| | | US 2016194512 A1 | 07-07-2016 |
| | | WO 2015014699 A1 | 05-02-2015 |
| EP 1904573 A1 | 02-04-2008 | BR PI0613464 A2 | 06-11-2012 |
| | | CN 101223230 A | 16-07-2008 |
| | | EP 1743921 A1 | 17-01-2007 |
| | | EP 1904573 A1 | 02-04-2008 |
| | | US 2009171004 A1 | 02-07-2009 |
| | | WO 2007006646 A1 | 18-01-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 168020 A
- US 5006594 A
- US 7662886 A
- US 20080032080 A
- US 4281092 A
- US 5447993 A
- US 5789489 A
- EP 661304 A
- EP 860436 A
- WO 9705122 A